# EUROPEAN PATENT SPECIFICATION

(11) **EP 1 711 871 B1**
(45) Date of publication and mention of the grant of the patent: **28.10.2009**
(21) Application number: 05705053.6
(22) Date of filing: 04.01.2005
(51) Int. Cl.: G05B 19/418

(54) **MONITORING DEVICE USED FOR PRODUCING COMPOSITIONS**
ÜBERWACHUNGSEINRICHTUNG FÜR DIE HERSTELLUNG VON ZUSAMMENSETZUNGEN
DISPOSITIF DE SURVEILLANCE UTILISE POUR LA PRODUCTION DE COMPOSITIONS

(30) Priority: 14.01.2004 US 536363 P
(43) Date of publication of application: 18.10.2006
(73) Proprietor: E.I. DU PONT DE NEMOURS AND COMPANY, Wilmington, DE 19898 (US)
(72) Inventor: POLARINE, Christine, Darlene-Ames, Spring City, PA 19475 (US)
(74) Representative: DuPont Performance Coatings Biering/Blum/Kimpel
(86) International application number: PCT/US2005/000250
(87) International publication number: WO 2005/071506

(56) References cited:
- WO-A-02/00335
- US-A- 5 853 244

## Description

### Field of Invention

The present invention is directed to monitoring production of compositions and more particularly directed to monitoring paint cans and paints contained therein during their life cycle.

### Background of Invention

During the production of compositions, such as automotive paints, several components are mixed in a certain desired proportion to produce a composition. For example paint shop users visually match the required color to a color reference chip from a color reference chip manual supplied by Du Pont Company, Wilmington, Delaware, which also provides the manufacturer's paint code. Alternatively, the paint shops can use a software tool called Vindicator^{®} locator software supplied by DuPont Company to locate the VIN number/ manufacturer's paint code, and then translate it to a DuPont formula code. However, these paint codes still need to be matched to a color formula. Once the formula that matches the paint code is found, components in quantities listed in the formula are manually poured into a receiving container positioned on a stand-alone scale. Typically, no data are kept for future use and no inventory of dispensed components is maintained. Some shops use semi-automated dispensing systems, such as a dispenser connected to the ColorNet^{®} PC dispensing system supplied by YADA Systems, Roseville, Minnesota. The user manually weighs-out component quantities in accordance with a formula. The quantities of dispensed components are recorded in a database. The quantities of dispensed components are recorded in a database. If the dispensed quantities are above a present acceptable tolerance, the dispensing system can recalculate the component quantities to bring the batch back into an acceptable tolerance level. Printouts of the quantities of the dispensed components can be stored or printed out for future reference. Alternatively, some paint shops use X-Pert^{™} Paint Mixing System supplied by YADA Systems, Roseville, Minnesota connected to ColorNet^{®} PC dispensing system. The X-Pert^{™} System prompts the user to load a receiver, such as paint can, into a receiving fixture. The controller manipulates the fixture to dispense the correct amount of component. When that component has been dispensed, the next component is loaded in the fixture. The process is then repeated until all the components listed in the formula are dispensed. Resulting data are saved for later use.
US 5,853,244 describes a computer-based microingredient inventory accounting system and process for use with programmable microingredient dispensing and mixing machinery. A programmable microingredient dispensing and mixing system coupled with said accounting system includes weight measuring mechanisms that are interfaced with a computer system programmed to continuously monitor the weight of microingredients stored on a plurality of inventory storage scales, as well as in a plurality of dispensing bins and tanks.

A major problem associated with the forgoing systems is that these systems do not control the quality or types of components used in producing a target composition. As there is no monitoring of the dispensed components used to make the target composition, it is possible in the current processes to use inferior quality component or a wrong component. As result, it is not possible in the current processes to produce target compositions of desired predictable quality. The process of the present invention and the device used therein address the foregoing issue as well as provide means for monitoring the life cycle of the components, from the day they are produced by their manufacturer to the day they are dispensed by the user.

An object tracking and management system disclosed in US Patents 6,600, 418 B2 utilizes radio frequency identification (RFID) tags to identify and move objects during the manufacturing process. However, need still exists to monitor production of compositions of desired quality.

### Statement of Invention

The present invention is directed to a monitoring device comprising:
(A) a client computer usable storage medium located in a client computer, and a host computer usable storage medium located in a host computer in communication with said client computer; and
(B) means for dispensing required items for making a desired amount of said target composition, said means for dispensing being in communication with said client computer, said host computer, or said client and said host computer;
wherein said client computer usable storage medium, host computer usable storage medium, or said client computer usable storage and said host computer usable storage media have computer readable program code means residing therein for monitoring production of a target composition, said computer readable program code means comprising:
(I) means for configuring computer readable program code devices to cause said client computer or said host computer to identify one or more formulas associated with identification criteria of said target composition, said formula providing a required inventory for making said desired amount of said target composition;
(II) means for configuring computer readable program code devices to cause said client computer or said host computer to generate a current inventory;
(III) means for configuring computer readable program code devices to cause said client computer or said host computer to compare said current inventory against said required inventory to ascertain whether said current inventory fulfills said required inventory;
(IV) means for configuring computer readable program code devices to cause said client computer or said host computer to generate a supplementary inventory if said current inventory partially fulfills said required inventory;
(V) means for configuring computer readable program code devices to cause said client computer or said host computer to dispense through said means for dispensing said required items listed in said required inventory from current items listed in said current inventory, supplementary items listed in said supplementary inventory, or a combination thereof to make said desired amount of said target composition; and
(VI) means for configuring computer readable program code devices to cause said client computer or said host computer to generate an updated inventory.

The present invention is also directed to a process for monitoring production of a target composition comprising:
(A) identifying one or more formulas associated with identification criteria of said target composition, said formula providing a required inventory for making a desired amount of said target composition;
(B) generating a current inventory;
(C) comparing said current inventory against said required inventory to ascertain whether said current inventory fulfills said required inventory;
(D) generating a supplementary inventory if said current inventory partially fulfills said required inventory;
(E) dispensing required items listed in said required inventory from current items listed in said current inventory, supplementary items listed in said supplementary inventory, or a combination thereof to make said desired amount of said target composition; and
(F) generating an updated inventory.

The present invention is further directed to a process for monitoring production of a target composition comprising:
(A) entering identification criteria of said target composition on a client computer or on a host computer in communication with said client computer;
(B) searching a first database residing on said client computer or on said host computer for identifying one or more characteristics associated with said identification criteria;
(C) searching a second database residing on said client computer or said host computer for one or more formulas associated with said characteristics, said formula providing a required inventory for making a desired amount of said target composition;
(D) generating a current inventory;
(E) storing said current inventory on said client computer or on said host computer;
(F) comparing said current inventory against said required inventory to ascertain whether said current inventory fulfills said required inventory;
(G) generating a supplementary inventory if said current inventory partially fulfills said required inventory wherein said supplementary inventory stored on said client computer or on said host computer;
(H) dispensing required items listed in said required inventory from current items listed in said current inventory, supplementary items listed in said supplementary inventory, or a combination thereof to make said desired amount of said target composition;
(I) generating an updated inventory; and
(J) storing said updated inventory on said client computer or on said host computer.

The present invention is still further directed to a process for monitoring production of a target composition comprising:
(A) receiving identification criteria of said target composition from a client computer in communication with a host computer;
(B) searching a first database for identifying one or more characteristics associated with said identification criteria, said first database residing on said host computer;
(C) searching a second database residing on said host computer for one or more said formulas associated with said characteristics, said formula providing a required inventory for making a desired amount of said target composition;
(D) receiving a current inventory from said client computer;
(E) comparing said current inventory against said required inventory to ascertain whether said current inventory fulfills said required inventory;
(F) generating a supplementary inventory if said current inventory partially fulfills said required inventory wherein said supplementary inventory stored on said client computer or on said host computer;
(G) dispensing required items listed in said required inventory from current items listed in said current inventory, supplementary items listed in said supplementary inventory, or a combination thereof to make said desired amount of said target composition;
(H) generating an updated inventory; and
(I) storing said updated inventory on said client computer or on said host computer.

The present invention is further directed to a process for monitoring production of a target composition comprising:
(A) receiving identification criteria of said target composition from a client computer in communication with a host computer;
(B) searching a first database for identifying one or more characteristics associated with said identification criteria, said first database residing on said host computer;
(C) searching a second database residing on said host computer for one or more said formulas associated with said characteristics, said formula providing a required inventory for making a desired amount of said target composition;
(D) receiving a current inventory from said client computer;
(E) sending to said client computer said formulas;
(F) receiving from said client computer an updated inventory; and
(G) storing said updated inventory on said host computer.

The present invention is also directed to a monitoring device comprising:
(A) a computer usable storage medium located in a computer; and
(B) means for dispensing required items for making a desired amount of said target composition, said means for dispensing being in communication with said computer;
wherein said computer usable storage medium has computer readable program code means residing therein for monitoring production of a target composition, said computer readable program code means comprising:
(I) means for configuring computer readable program code devices to cause said computer to identify one or more formulas associated with identification criteria of said target composition, said formula providing a required inventory for making said desired amount of said target composition;
(II) means for configuring computer readable program code devices to cause said computer to generate a current inventory;
(III) means for configuring computer readable program code devices to cause said computer to compare said current inventory against said required inventory to ascertain whether said current inventory fulfills said required inventory;
(IV) means for configuring computer readable program code devices to cause said computer to generate a supplementary inventory if said current inventory partially fulfills said required inventory;
(V) means for configuring computer readable program code devices to cause said computer to dispense through said means for dispensing said required items listed in said required inventory from current items listed in said current inventory, supplementary items listed in said supplementary inventory, or a combination thereof to make said desired amount of said target composition; and
(VI) means for configuring computer readable program code devices to cause said computer to generate an updated inventory.

### Brief Description of the Drawings

Figure 1 broadly illustrates one of the embodiments of the device of the present invention.

Figure 2 broadly illustrates the dispensing means used in the device of Figure 1.

Figures 3A and 3B represent a flowchart that broadly illustrates computer readable program code means used in the device of the present invention illustrated in Figure 1.

Figure 4 provides further details of means for configuring computer readable program code devices to cause a client computer or a host computer to generate a current inventory shown in Figure 3A.

Figure 5 provides further details of means for configuring computer readable program code devices to cause the client computer or the host computer to generate an updated inventory shown in Figure 3B.

Figure 6 represents a flowchart that further illustrates computer readable program code means used in the device of the present invention illustrated in Figure 1.

Figure 7 broadly illustrates another embodiments of the device of the present invention.

Figures 8A and 8B represent a flowchart that broadly illustrates computer readable program code means used in the device of the present invention illustrated in Figure 7.

Figure 9 provides further details of means for configuring computer readable program code devices to cause a stand-alone computer to generate a current inventory shown in Figure 8A.

Figure 10 provides further details of means for configuring computer readable program code devices to cause the computer to generate an updated inventory shown in Figure 8B.

Figure 11 represents a flowchart that further illustrates computer readable program code means used in the device of the present invention illustrated in Figure 7.

### Detailed Description of Preferred the Embodiment

Compositions, such as automotive paints used in OEM (original equipment manufacturer) or refinish application, are typically prepared by mixing required items in quantities listed in one or more formulas. The required items are dispensed from current items in current inventory, such as one or more stock compositions that match a target composition, target components listed in the formulas, or a combination thereof. Sometimes, the current inventory may not have sufficient quantity of stock compositions required for making a desired quantity of the target composition, or a target component listed in the formula may be missing in the current inventory, or a combination thereof. Thus, supplementary items from a supplementary inventory may be required to augment the current inventory such that the required items can be dispensed to make the desired quantity of the target composition.

It should be understood that the term "composition" as used herein refers to compositions that include liquid components; solid components, such as powders, granules, or pellets that can be conveyed through conventional conveying means, such as pneumatic conveyers; or a mixture of liquid and solid components. Typical target compositions that can be produced by a device and the process of the present invention include OEM automotive paints, refinish automotive paints, architectural paints, industrial coating compositions, fragrances, dyes, printing inks, ink jet inks, lubricants, cements, nail polishes, flavors, food colorants, eye shadows, deodorants, shampoos, hair conditioners, adhesives, perfumes, caulks, masonry wall repair kits, catalyst blends, pharmaceutical drugs, food additives, polymer blends, blends of reactants; blends of food products, such as ready-to-use soups, cake mixes, spice mixtures, coffee blends, ice cream blends; or a point-of-purchase consumer products. The present invention provides for a device and a process used therein to monitor production of such compositions and more particularly directed to monitoring paint cans and paints contained therein during their life cycle.

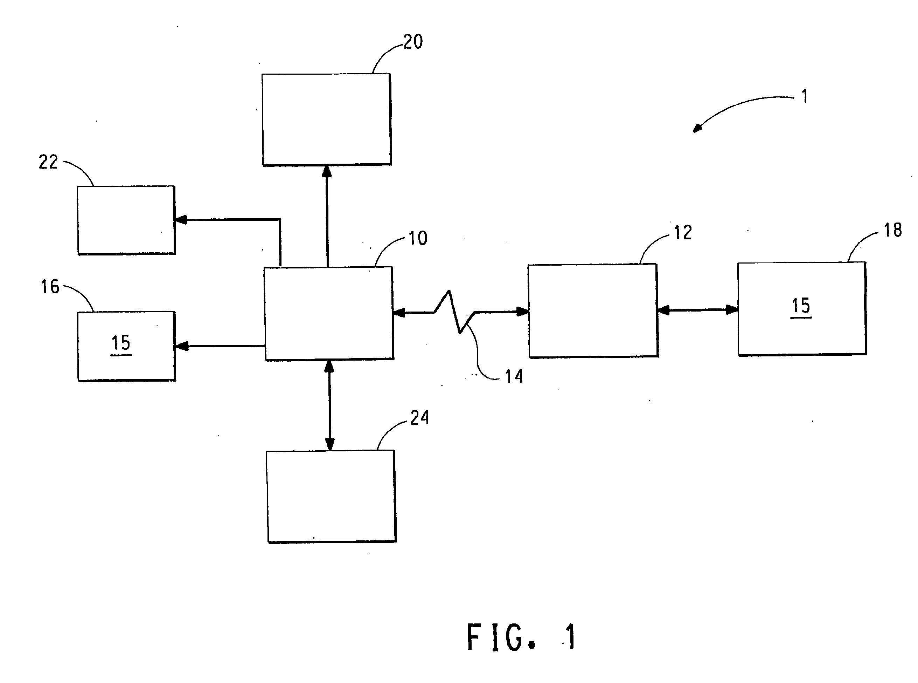

Figure 1 illustrates the broadest aspects of the preferred embodiment of a monitoring device 1 of the present invention. Device 1 includes a client computer 10 and a host computer 12 in communication with client computer 10 via a conventional communication link 14, such as modem, internet, local area network, or a wireless communication system. A conventional client computer usable storage medium 16 is located in and in communication with client computer 10 and a conventional host computer usable storage medium 18 is located in and in communication with host computer 12. If desired, media 16 and 18 could be outside of client computer 10 and host computer 12, respectively. Client computer 10 is preferably provided with a conventional monitor/key board 20 and a conventional printer 22. Client computer 10 and host computer 12 can be any known computer/processor such as those supplied by Dell Computer Corporation, Round Rock, Texas or IBM Corporation, Armonk, New York that can be configured to execute conventional computer program codes.

It should be understood that client computer 10 and host computer 12 can be located anywhere, such as for example computer 10 can be located in one country, such as the United States, or another state and host computer 12 can be located in another country, such as Canada, or another state. Alternatively, host computer 12 can be located in one country, such as United States, or another state and client computer 10 can be located in another country, such as Canada, or another state. It should be further understood that host computer 12 could be in communication with plurality of client computers 10.

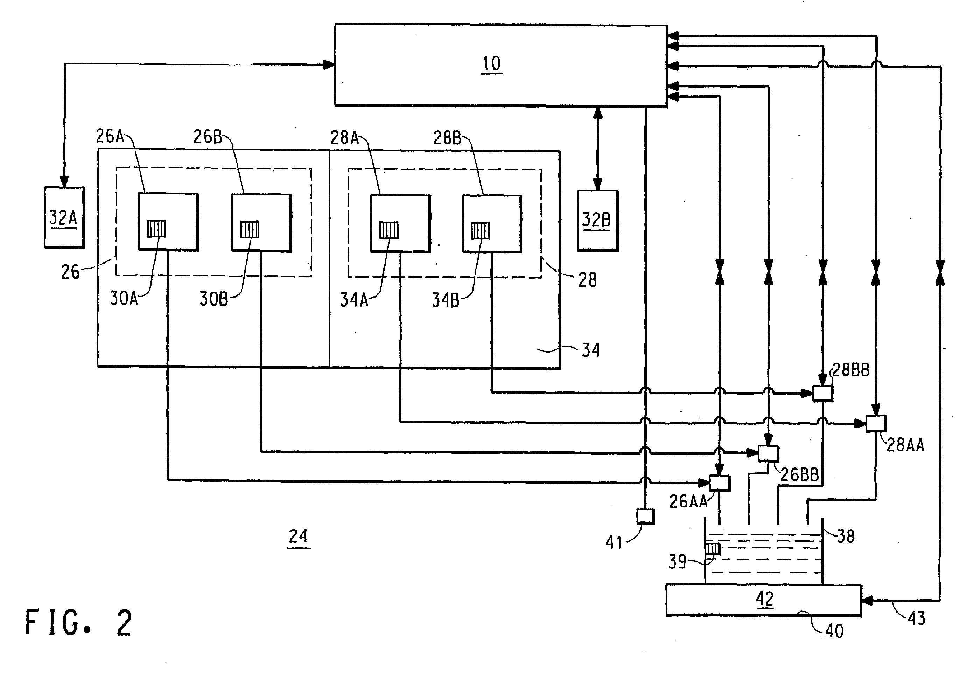

Device 1 further includes means for dispensing 24, the details of which are provided in Figure 2. Storing means 34, such as racks, can be employed to store current stock 26, indicated by a dotted line box, which typically contains one or more stock composition containers 26A and one or more stock component containers 26B. Current stock 26 can be augmented with a supplementary stock 28, indicated by dotted line, which typically contains additional quantities of stock compositions stored in additional stock composition containers 28A and any missing stock components contained in missing stock component containers 28B. It is contemplated that stock compositions, additional quantities of the stock compositions, stock components or any missing stock components could also be brought to device 1, as required, from a storage area. It should be understood that the various aforedescribed containers could be arranged in any other manner, if so desired, as the physical positioning of such containers is not critical.

Stock information on containers can be provided through identification tags such as, stock composition information on stock composition identification tags 30A affixed to stock composition containers 26A, stock component information on stock components identification tags 30B affixed to stock component containers 26B, additional stock composition information on additional stock composition identification tags 34A affixed to additional stock composition containers 28A and missing stock component information on missing stock components identification tags 34B affixed to missing stock component containers 28B.

The aforedescribed tags can be bar code tags, conventional RFID tags, or a combination thereof where the bar code can be printed on top of the RFID tags such that the information contained in the tag can be read with either bar code reader or conventional RFID interrogator. RFID tag system is preferred. A basic RFID system typically includes an interrogator that includes an interrogator antenna or coil, and a transceiver (with decoder); and a transponder provided with a transponder antenna or coil (RFID tag), wherein the transponder is electronically programmed with unique information. The interrogator antenna emits radio signals to activate the tag and read and write data to it. Antennas are the conduits between the tag and the transceiver, which controls the system's data acquisition and communication. Antennas, which are available in a variety of shapes and sizes can be built into a frame to receive tag data from articles passing or positioned near the frame. Frequently, the interrogator (a.k.a. reader), which is packaged with the interrogator antenna and the transceiver/decoder to can be configured either as a handheld or a fixed-mount device. The interrogator emits radio waves in ranges of anywhere from few millimeters to 30 meters or more, depending upon its power output and the radio frequency used. When an RFID tag passes through or near the electromagnetic zone, it detects the interrogator's activation signal. The interrogator decodes the data encoded in the tag's integrated circuit (silicon chip) and the data is passed to the host computer for processing.

RFID tags come in a wide variety of shapes and sizes and are categorized as either active or passive. Active RFID tags are powered by an internal battery and are typically read/write, i.e., tag data can be rewritten and/or modified. An active tag's memory size varies according to application requirements; some systems operate with up to 1 MB of memory. In a typical read/write RFID work-in-process system, a tag might transmit to a machine a set of instructions, and the machine would then report its performance to the tag. This encoded data would then become part of the tagged part's history. The battery-supplied power of an active tag generally gives it a longer read range. The trade off is greater size, greater cost, and a limited operational life (which may yield a maximum of 10 years, depending upon operating temperatures and battery type). Typical RFID tags and method of producing them is disclosed in the US Patent RE37,956E, which is incorporated herein by reference.

By contrast, passive RFID tags operate without a separate external power source and obtain operating power generated from the interrogator. Passive tags are consequently much lighter than active tags, less expensive, and offer a virtually unlimited operational lifetime. The trade off is that they have shorter read ranges than active tags and require a higher-powered interrogator.

RFID systems suitable for use in the present intention preferably operate at frequencies ranging from 125 KHz to 2.45 GHz. The significant advantage of all types of RFID systems is the non-contact, non-line-of-sight nature of the technology. Tags can be read through a variety of substances such as dirt, crusted grime, and other visually and environmentally challenging conditions, where barcodes or other optically read technologies would be useless. RFID tags can also be read in challenging circumstances at remarkable speeds, in most cases responding in less than 100 milliseconds. The read/write capability of an active RFID system is also a significant advantage in interactive applications of the process of the present invention.

One or more conventional interrogators 32A and 32B can be used to read the stock composition information, stock component information, additional stock composition information and missing stock component information. Some of the typical bar code readers include Maxiscan 2210 supplied by Intermec Technologies Corporation of Everett, Washington or MC9000-G supplied by Symbol Technologies of Holtsville, New York and some of the typical RFID interrogators include Model 915 or 2450 supplied by Alien Technology Corporation of Morgan Hill, California; Fasttrack LRP or HMS models supplied by Escort Memory Systems of Scotts Valley, California; and Models MP9111, MP9112, MP9210, MP9320, and 13.56 all supplied by Samsys Technologies, Inc. of Richmond Hill, Ontario, Canada. Some of the typical combination bar code reader/RFID interrogators include Model 1555 supplied by Intermec Technologies Corporation of Everett, Washington; or Model HHR supplied by Matrics, Inc. of Columbia, Maryland. When the aforedescribed containers are made of metal or metal alloy, such as steel, RFID tags are preferably disposed on an insulated substrate, such as paper, plastic film, or a resinous coating, such as a painted surface, to insulate RFID tags from the metal containers. It is contemplated that RFID tags, including tag antennas could be directly printed on the aforedescribed containers by using conductive ink or conductive ink jet ink printing process developed, for example, by Carclo PLC of Wakefield, United Kingdom.

The stock composition information on stock composition identification tags 30A affixed to stock composition containers 26A, stock component information on stock components identification tags 30B affixed to stock component containers 26B, additional stock composition information on additional stock composition identification tags 34A affixed to additional stock composition containers 28A and missing stock component information on missing stock components identification tags 34B affixed to missing stock component containers 28B. One or more conventional interrogators 32A and 32B can be used to read the stock composition information, stock component information, additional stock composition information and missing stock component information.

The stock composition information on stock composition identification tags 30A can include identity of the stock composition, compositional structure of the stock composition, quantity of the stock composition contained in the stock composition container, price of the stock composition contained in the stock composition container, serial number of the stock composition container, place of manufacture of the stock composition, location of the stock composition container, date of manufacture of the stock composition, date of expiration of the stock composition, toxicity information of the stock composition, MSDS of the stock composition, manufacturer of the stock composition and contact information thereof; or a combination thereof.

The stock component information on stock component identification tags 30B can include identity of the stock component, compositional structure of the stock component, quantity of the stock component contained in the stock component container, price of the stock component contained in the stock component container, place of manufacture of the stock component, location of the stock component container, date of manufacture of the stock component, serial number of the stock - component container, date of expiration of the stock component, toxicity information of the stock component, MSDS of the stock component, manufacturer of the stock component and contact information thereof; or a combination thereof.

The additional stock composition information on additional stock composition identification tags 34A can include identity of the additional stock composition, compositional structure of the additional stock composition, quantity of the additional stock composition contained in the additional stock composition container, price of the additional stock composition contained in the additional stock composition container, place of manufacture of the additional stock composition, location of the additional stock composition container, date of manufacture of the additional stock composition, serial number of the additional stock composition container, date of expiration of the additional stock composition, toxicity information of the additional stock composition, MSDS of the additional stock composition, manufacturer of the additional stock composition and contact information thereof; or a combination thereof. It is contemplated that the additional stock compositions can be the same as the stock compositions or they can be one or more additional stock compositions that match on the basis of preset criteria.

The missing stock component information on missing stock component identification tags 34B can include identity of the missing stock component, compositional structure of the missing stock component, quantity of the missing stock component contained in the missing stock component container, price of the missing stock component contained in the missing stock component container, place of manufacture of the missing stock component, location of the missing stock component container, serial number of the missing stock component container, date of manufacture of the missing stock component, date of expiration of the missing stock component, toxicity information of the missing stock component, MSDS of the missing stock component, manufacturer of the missing stock component and contact information thereof; or a combination thereof. The present invention contemplates adding one or more missing stock components to any stock compositions that do not match the formulas associated with the identified characteristics so that such modified stock compositions could then be utilized as target compositions.

In one of the embodiments, means for dispensing 24 further include conventional means for conveying, such as tubes or pipes, to convey the contents from containers 26A, 26B, 28A and 28B via respective conventional dispenser nozzles 26AA, 26BB, 28AA and 28BB to an identified target composition receiver 38, which is provided with a target composition identification tag 39, which can be read by or written to by an identification interrogator 41, which is similar to the ones described earlier. Alternatively, it is contemplated that a single dispensing nozzle, instead of the aforementioned plurality of nozzles, could be employed to convey the contents from the various aforedescribed containers to receiver 38. One type of dispenser apparatus suitable for use in the present invention is described in PCT application having International Publication Number WO 03/084653A1.

Dispenser nozzles 26AA, 26BB, 28AA and 28BB are in communication with client computer 10', such that the opening and closing of dispenser nozzles 26AA, 26BB, 28AA and 28BB can be controlled by client computer 10' in accordance with the formula. It should be noted that quantity of contents dispensed from current stock 26 and/or supplementary stock 28 can be controlled on a volumetric or preferably on a gravimetric basis. To control the dispensed content on the volumetric basis, dispenser nozzles 26AA, 26BB, 28AA and 28BB could be provided with conventional means to determine the volume of dispensed items. Alternatively, or in conjunction therewith, dispensing means 24 can be provided with means 40 for weighing the required items dispensed into identified target composition receiver 38. Means 40 typically include a conventional weighing scale 40, such as Model KB60sx supplied by Mettler-Toledo Incorporated of Columbus, Ohio or Model SC2CCE-SX supplied by Sartorius AG of Göettingen, Germany, on which receiver 38 can be positioned. Typically, means 40 include means 42 for generating a signal upon completion of dispensing of the required items in accordance with the required inventory and then transmitting the signal to client computer 10' via means 43 for transmitting the signal to client. Means 43 can be configured to transmit the signal to host computer 12 (shown in figure 1), or to client computer 10' and host computer 12. Alternatively or in combination thereof, it is contemplated that one could manually read off the amounts of dispensed items displayed on a weighing scale and then manually enter the data into client computer 10'.

It is further contemplated that once the dispensing process is completed, one can, using identification interrogator 41, write and/or print to target composition identification tag 39 a target composition information that includes the identity of the target composition, compositional structure of the target composition, quantity of the target composition contained in target composition content receiver 38, price of the target composition contained in the target composition content receiver 38, place of manufacture of the target composition, location of target composition content receiver 38, date of manufacture of the target composition, serial number of target composition content receiver 38, date of expiration of the target composition, toxicity information of the target composition, MSDS of the target composition, manufacturer of the target composition and contact information thereof; or a combination thereof. Interrogator 41 can be a barcode label printer/RFID writer, such as Easycoder F2 or F4 supplied by Intermec Technologies Corporation if Everett, Washington or Model R-140 or R-402 supplied by Zebra Technologies International of Vernon Hills, Illinois.

In order to allow the user to make the target composition closer to the place of customer's business, it is contemplated that device 1 could be built as a transportable device in which the relevant portions of device 1 are installed in a van or a trailer that could be driven to the customer's place of business where the target composition can then be made.

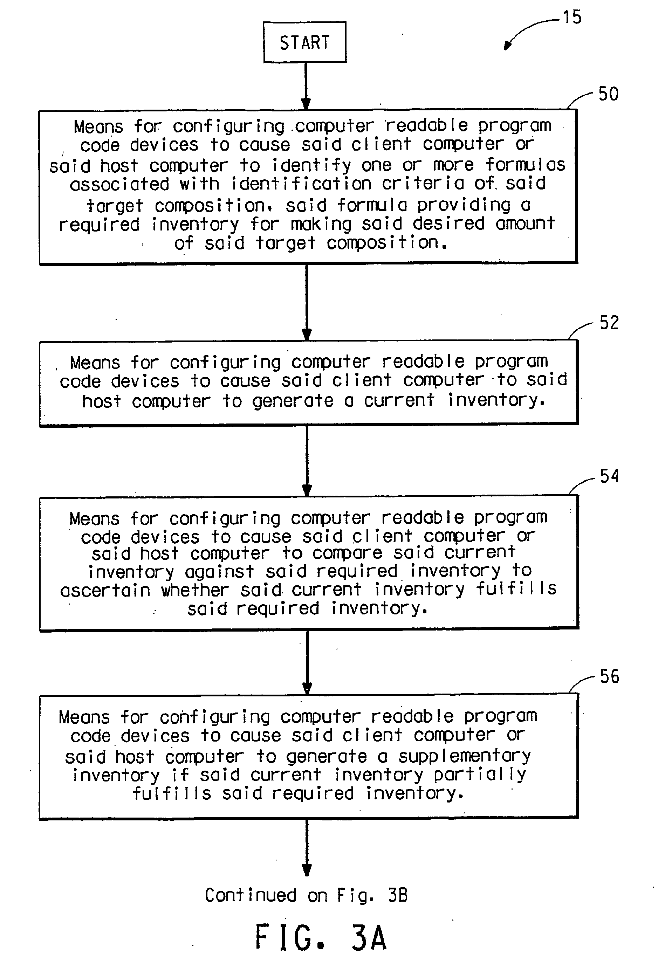

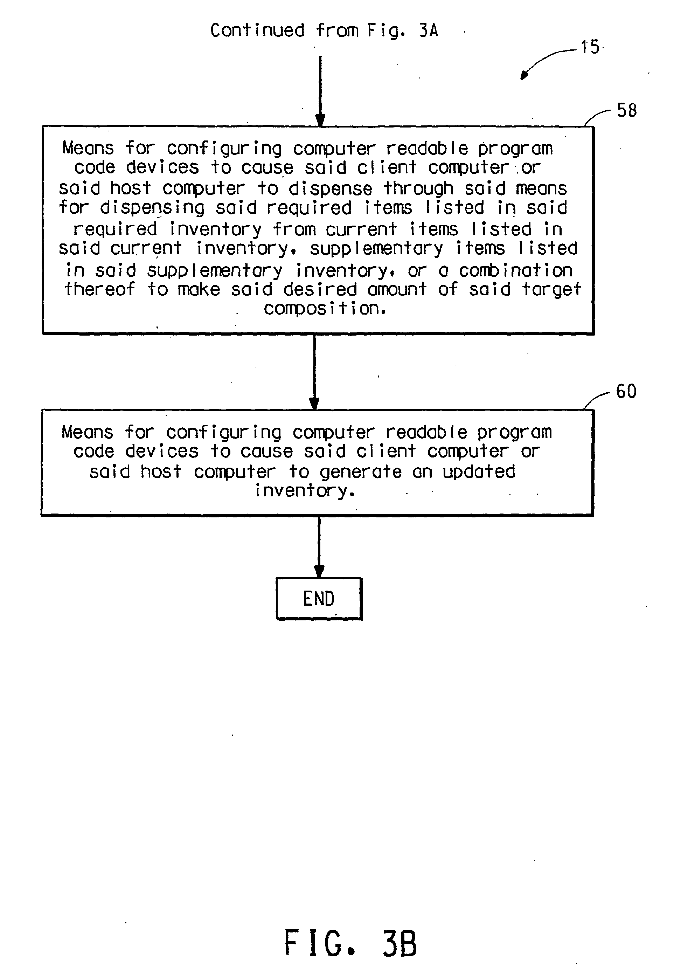

In device 1 client computer usable storage medium 16, host computer usable storage medium 18, or both have computer readable program code means 15 loaded therein for monitoring production of a target composition, which can be written by using conventional programming software, such as C++ Builder, Version 5 or Delphi, Version 6, both supplied by Borland Corporation located in Scotts Valley, California. Details of computer readable program code 15, shown in Figures 3A and 3B, include:

Means 50 for configuring computer readable program code devices to cause client computer 10 or host computer 12 to identify one or more formulas associated with the identification criteria of the target composition, the formula providing a required inventory for making the desired amount of the target composition. For example, the identification criteria of the target composition in the form of an automotive paint can include, one or more of a manufacturer name, make, model, year of production, color name, paint code, cross reference information, intended use, VIN number, or spectrophotometric data of a vehicle or its color. The identification criteria can be entered manually by the user in client computer 10 or it can reside on an identification criteria identification tag, such as RFID tag or bar code tag positioned on a vehicle or on a color reference chip supplied by a manufacturer, in which case the user can then use a conventional identification interrogator to read off and enter the identification criteria directly from the tag into client computer 10. It is understood that for some other uses, such as architectural coating compositions, other types of identification criteria, such as a manufacturer name, year of production, color name, paint code, cross reference information, intended use, or spectrophotometric data of a wall or its color, could be employed. The characteristics associated with the identification criteria typically include, for example, color characteristics, such as conventional L,a,b color data or spectral data; the volatile organic content (VOC); pH of aqueous compositions; appearance characteristics, such as flop of metallic paint compositions; coefficient of friction; and viscosity. The required inventory, which is based on the formula includes information on required items such as (a) one or more compositions matching the characteristics and quantities thereof required to make the desired amount of the target composition; (b) target components and quantities thereof listed in the formula that are required to make the desired amount of the target composition; or a (c) combination of (a) and (b).

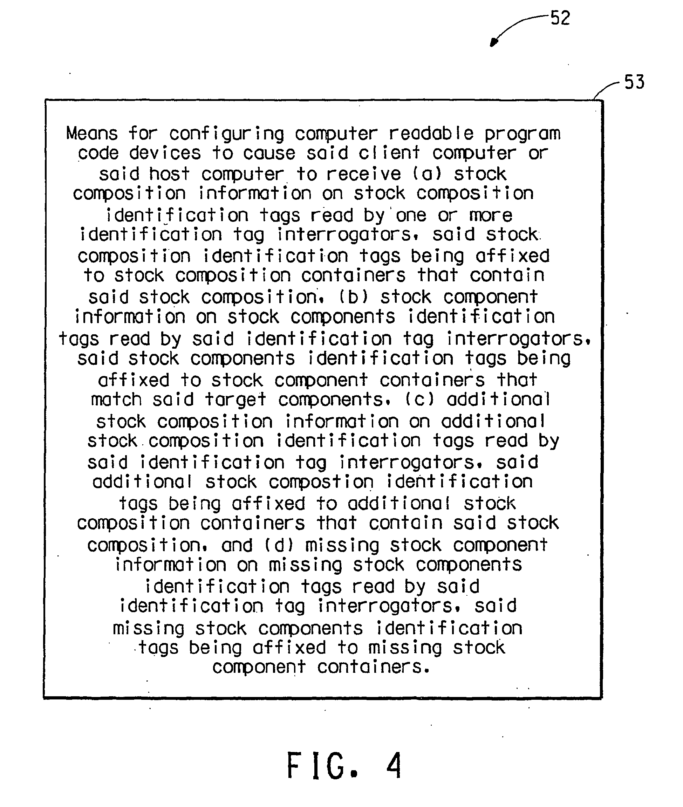

Means 52 for configuring computer readable program code devices to cause client computer 10 or host computer 12 to generate a current inventory, which includes information on the current items, such as (a) one or more stock compositions matching the characteristics and quantities thereof required to make the desired amount of said target composition; (b) stock target components and quantities thereof listed in said formula that are required to make the desired amount of said target composition; or (c) a combination of (a) and (b). The current inventory typically refers to the items that can be readily dispensed by device 1 before the dispensing of the required items listed in the required inventory, and would include current stock 26 and supplementary stock 28. The current inventory is then entered into client computer 10 before the required items are dispensed by means 24 for dispensing. If there were no changes, such as replenishing of any depleted stock compositions or stock components or removal of such items from storing means 34, it may not be necessary to renter the current inventory since it was not changed during the previous dispensing cycle. As shown in Figure 4, means 52 also include means 53 configured to cause client computer 10 or host computer 12 to receive (a) the stock composition information on stock composition identification tags 30A read by one or more identification tag interrogators 32A, (b) the stock component information on stock components identification tags 30B read by identification tag interrogators 32A, (c) the additional stock composition information on additional stock composition identification tags 34A read by identification tag interrogators 32B, and (d) the missing stock component information on missing stock components identification tags 34B read by said identification tag interrogators 32B.

Means 54 for configuring computer readable program code devices to cause client computer 10 or host computer 12 to compare the current inventory against the required inventory to ascertain whether the current inventory fulfills said required inventory. Thus, if one or more component listed in the formula is missing or if less than the desired amount of the stock compositions is available in the current inventory it would be clear that the current inventory fails to fulfill the required inventory.

Means 56 for configuring computer readable program code devices to cause client computer 10 or host computer 12 to generate a supplementary inventory if the current inventory partially fulfills the required inventory. The supplementary inventory includes information on (a) additional quantities of the stock compositions required to produce the desired amount of the target composition, (b) any missing stock components that match the target components listed in said formula in sufficient quantities required to produce the desired amount of the target composition, or (c) a combination of (a) and (b). As a result, the manufacturer or the supplier of the stock composition, or stock components has up-to-date real time inventory of these items and can then readily re-supply these items based on the up-to-date real time information available from the stored inventory, which the manufacturer or the supplier can obtain by accessing the current and supplementary inventories residing on client computer 10 or host computer 12.

Means 58 for configuring computer readable program code devices to cause client computer 10 or host computer 12 to dispense through means 24 for dispensing the required items listed in the required inventory from current items listed in the current inventory, supplementary items listed in the supplementary inventory, or a combination thereof to make the desired amount of the target composition.

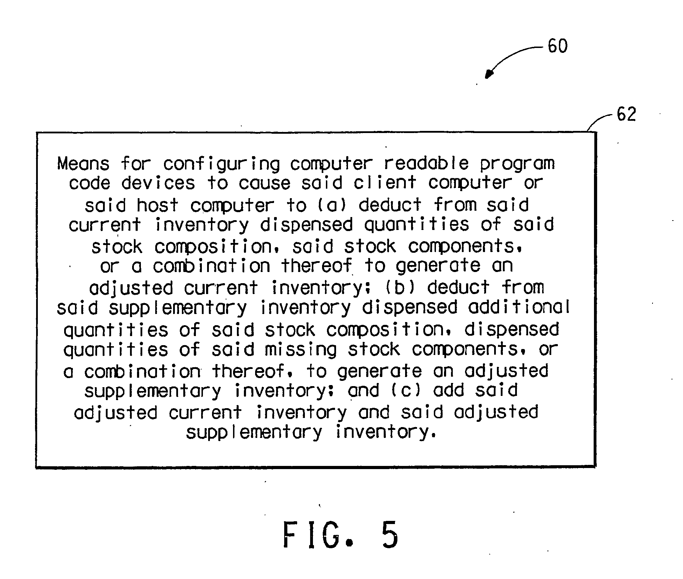

Means 60 for configuring computer readable program code devices to cause client computer 10 or host computer 12 to generate an updated inventory. As shown in Figure 5, means 60 comprise means 62 for configuring computer readable program code devices to cause client computer 10 or host computer 12 to (a) deduct from the current inventory dispensed quantities of the stock composition, the stock components, or a combination thereof to generate an adjusted current inventory; (b) deduct from the supplementary inventory dispensed additional quantities of the stock composition, dispensed quantities of the missing stock components, or a combination thereof, to generate an adjusted supplementary inventory; and (c) add the adjusted current inventory and the adjusted supplementary inventory. The aforementioned sum then becomes the updated inventory. It should be noted the updated inventory would then become the stored inventory in the subsequent dispensing cycle.

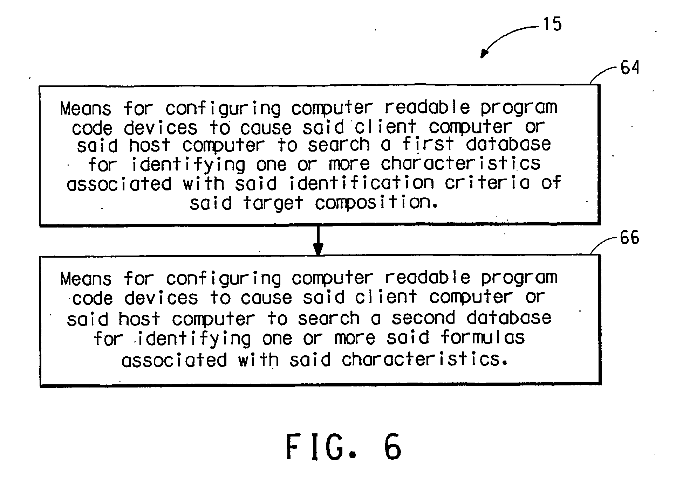

Computer readable program code 15, shown in Figure 6, further includes:

means 64 for configuring computer readable program code devices to cause client computer 10 or host computer 12 to search a first database for identifying one or more characteristics associated with the identification criteria of the target composition; and

means 66 for configuring computer readable program code devices to cause client computer 10 or host computer 12 to search a second database for identifying one or more said formulas associated with the characteristics.

The first database can be stored on client computer 10 and the second database can be stored on host computer 12. Alternatively, the first and the second database can both be stored on host computer 12 in communication with client computer 10, or the first and the second database both can be stored on the client computer 10.

The present invention is also directed to a process for monitoring production of the target composition. All the terms described in the following process are the same as those described earlier. In its broadest aspect the process includes:

(A) identifying one or more formulas associated with identification criteria of the target composition, the formula providing a required inventory for making a desired amount of the target composition;

(B) generating a current inventory;

(C) comparing the current inventory against the required inventory to match the current inventory with the required inventory;

(D) generating a supplementary inventory if the current inventory partially matches with the required inventory;

(E) dispensing required items listed in the required inventory from current items listed in the current inventory, supplementary items listed in the supplementary inventory, or a combination thereof to make the desired amount of the target composition; and

(F) generating an updated inventory. The foregoing step (E) is accomplished by dispensing means 24 of device 1.

The foregoing process also includes

(a) searching a first database for identifying one or more characteristics associated with the identification criteria of the target composition; and

(b) searching a second database for identifying one or more the formulas associated with the characteristics. The formula is preferably a color formula.

The step (D) in the foregoing process includes:
(a) reading with one or more identification tag interrogators 32B:
   (i) additional stock composition information on additional stock composition identification tags 34A affixed to additional stock composition containers 28A that contain the stock composition,
   (ii) missing stock component information on missing stock components identification tags 34B affixed to missing stock component containers 28B, or
   (iii) a combination of (i) and (ii); and

(b) storing the supplementary inventory.

The step (F) in the foregoing process includes:
(a) deducting from the current inventory dispensed quantities of the stock composition, the stock components, or a combination thereof to generate an adjusted current inventory;
(b) deducting from the supplementary inventory dispensed additional quantities of the stock composition, dispensed quantities of the missing stock components, or a combination thereof, to generate an adjusted supplementary inventory; and
(c) adding the adjusted current inventory and the adjusted supplementary inventory.

In the foregoing process, the updated inventory can be stored on the client computer, on the host computer, or on the client computer and the host computer and the required items in the required inventory are dispensed in identified target composition receiver 38.

The foregoing process can further include supplying some or all of the required items required to augment the updated inventory. As a result, most or all of all of the items could be made available during the subsequent use.

It is further contemplated that the updated inventory could be stored on a storage identification tag 34A affixed to storing means 34, which could be updated every time device 1 dispenses the required items required to make the target composition. It is understood storage identification tag 34A could be the aforedescribed conventional RFID tag, bar code tag or a combination thereof.

Another embodiment of the process of the present invention includes:

(A) entering identification criteria of the target composition on client computer 10 or on host computer 12 in communication with client computer 10;

(B) searching a first database residing on client computer 10 or on host computer 12 for identifying one or more characteristics associated with the identification criteria;

(C) searching a second database residing on client computer 10 or on host computer 12 for one or more formulas associated with the characteristics, the formula providing a required inventory for making a desired amount of the target composition;

(D) generating a current inventory;

(E) storing the current inventory on client computer 10 or on host computer 12;

(F) comparing the current inventory against the required inventory to ascertain whether said current inventory fulfills said required inventory;

(G) generating a supplementary inventory if the current inventory partially fulfills the required inventory wherein the supplementary inventory stored on the client computer or on the host computer;

(H) dispensing required items listed in the required inventory from current items listed in the current inventory, supplementary items listed in the supplementary inventory, or a combination thereof to make the desired amount of the target composition;

(I) generating an updated inventory; and

(J) storing the updated inventory on the client computer or on the host computer. In the foregoing process the second database, the stored inventory and the updated inventory can be stored on the host computer 12. The foregoing step (H) is accomplished by dispensing means 24 of device 1.

Another embodiment of the process of the present invention includes:

(A) receiving identification criteria of the target composition from client computer 10 in communication with host computer 12;

(B) searching a first database for identifying one or more characteristics associated with the identification criteria, the first database residing on host computer 12;

(C) searching a second database residing on host computer 12 for one or more the formulas associated with the characteristics, the formula providing a required inventory for making a desired amount of the target composition;

(D) receiving a current inventory from client computer 10;

(E) comparing the current inventory against the required inventory to ascertain whether said current inventory fulfills said required inventory;

(F) generating a supplementary inventory if the current inventory partially fulfills the required inventory wherein the supplementary inventory stored on client computer 10 or on host computer 12;

(G) dispensing required items listed in the required inventory from current items listed in the current inventory, supplementary items listed in the supplementary inventory, or a combination thereof to make the desired amount of the target composition;

(H) generating an updated inventory; and

(I) storing the updated inventory on client computer 10 or on host computer 12. The foregoing step (G) is accomplished by dispensing means 24 of device 1.

Still another embodiment of the process of the present invention includes:

(A) receiving identification criteria of the target composition from client computer 10 in communication with host computer 12;

(B) searching a first database for identifying one or more characteristics associated with the identification criteria, the first database residing on host computer 12;

(C) searching a second database residing on host computer 12 for one or more the formulas associated with the characteristics, the formula providing a required inventory for making a desired amount of the target composition;

(D) receiving a current inventory from client computer 10;

(E) sending to client computer 10 the formulas;

(G) receiving from client computer 10 an updated inventory; and

(H) storing the updated inventory on host computer 12.

The foregoing embodiments of the process can also include supplying some or all of the required items required to augment the updated inventory. As a result, most or all of all of the items could be made available during the subsequent use.

The present invention is also directed to a portable computer usable storage medium, such as a CD-Rom having the aforedescribed computer readable program code means 15 stored therein.

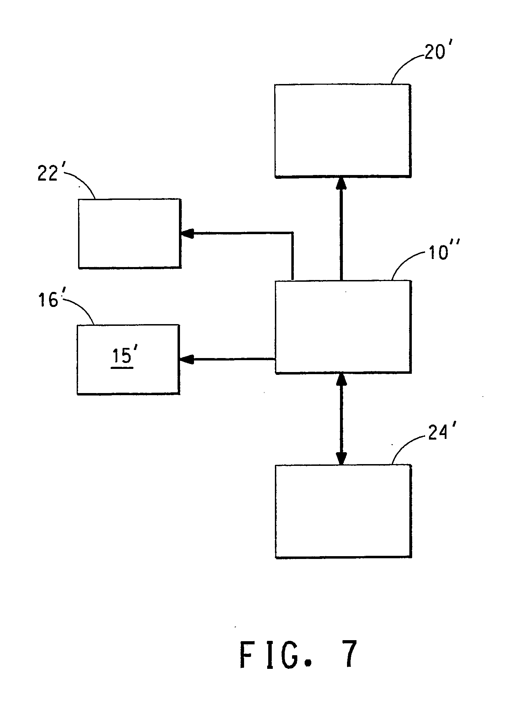

The applicants also contemplate another embodiment of the present invention shown in Figure 7 illustrating the broadest aspects of a monitoring device 2 of the present invention, which includes a stand-alone computer 10" having usable storage medium 16' is located therein. Computer 10" can be provided with a conventional monitor/key board 20' and a conventional printer 22'. Client computer 10" can be any conventional computer/processor such as those supplied by Dell Computer Corporation, Round Rock, Texas or IBM Corporation, Armonk, New York that can be configured to read conventional computer program codes. Device 2 include means 24' for dispensing, which are the same as means 24 described earlier in Figure 2. Computer programmable code 15' would be similar to computer programmable code 15 described earlier, except all the information generated during the process is stored on stand-alone computer 10".

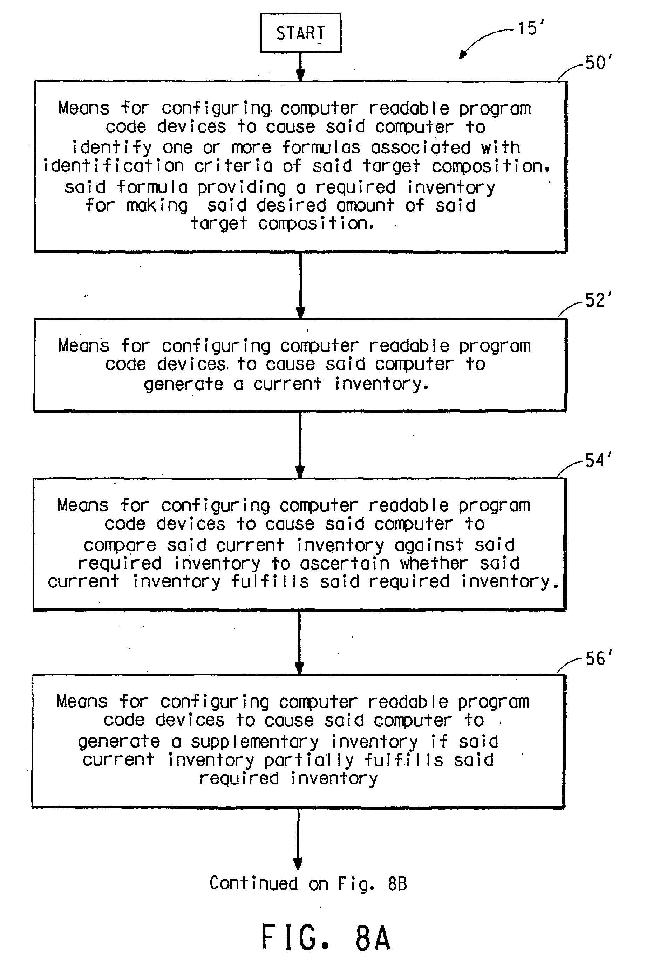

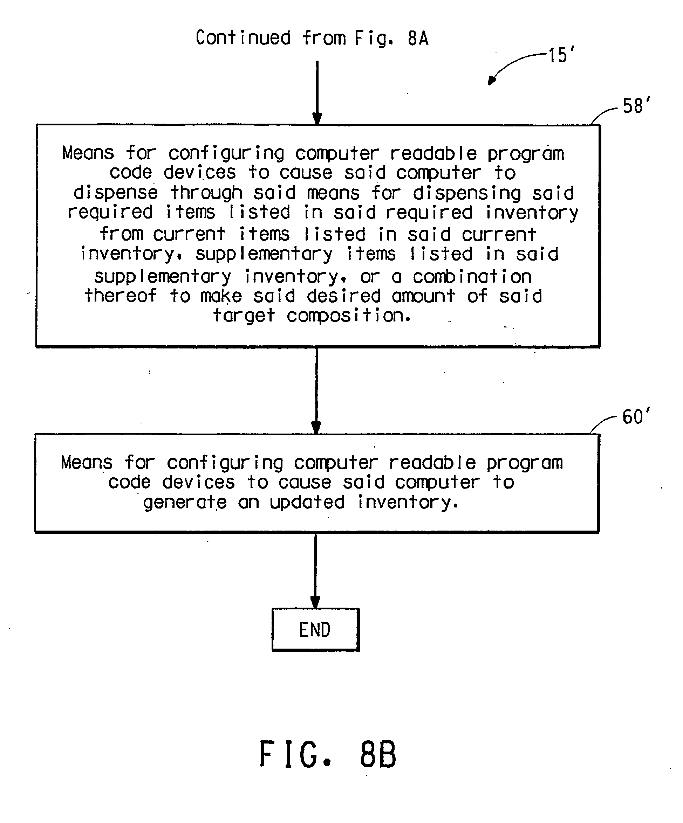

Relevant aspects of device 2, as shown in Figures 7, 8A and 8B include:

(A) a computer usable storage medium 16' located in a computer 10"; and

(B) means 24' for dispensing required items for making a desired amount of the target composition, the means 24' for dispensing being in communication with the computer;

wherein the computer usable storage medium 16' has computer readable program code means 15' residing therein for monitoring production of a target composition, the computer readable program code means 15' comprising:

(I) Means 50' for configuring computer readable program code devices to cause the computer to identify one or more formulas associated with identification criteria of the target composition, the formula providing a required inventory for making the desired amount of the target composition.

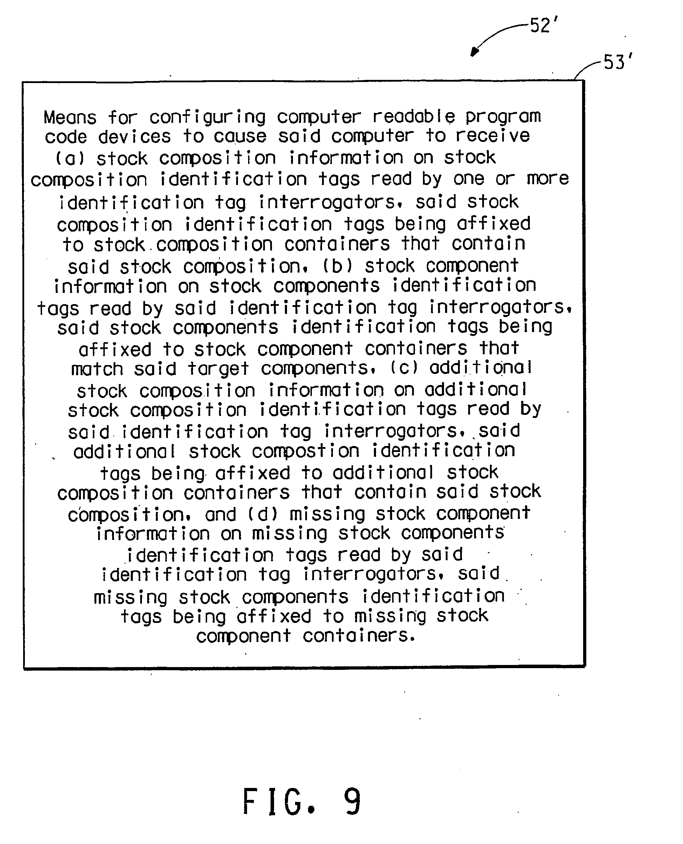

(II) Means 52' for configuring computer readable program code devices to cause the computer to generate a current inventory. As shown in Figure 8A and Figure 9, means 52' of code means 15' include means 53' for configuring computer readable program code devices to cause computer 10" to receive: (a) stock composition information on stock composition identification tags 30A read by one or more identification tag interrogators 32A, (b) stock component information on stock components identification tags 30B read by identification tag interrogators 32A, (c) additional stock composition information on additional stock composition identification tags 34B read by identification tag interrogators 32B, and (d) missing stock component information on missing stock components identification tags 34B read by the identification tag interrogators 32B.

(III) Means 54' for configuring computer readable program code devices to cause the computer to compare the current inventory against the required inventory to ascertain whether said current inventory fulfills said required inventory.

(IV) Means 56' for configuring computer readable program code devices to cause the computer to generate a supplementary inventory if the current inventory partially fulfills the required inventory.

(V) Means 58' for configuring computer readable program code devices to cause the computer to dispense through the means for dispensing the required items listed in the required inventory from current items listed in the current inventory, supplementary items listed in the supplementary inventory, or a combination thereof to make the desired amount of the target composition.

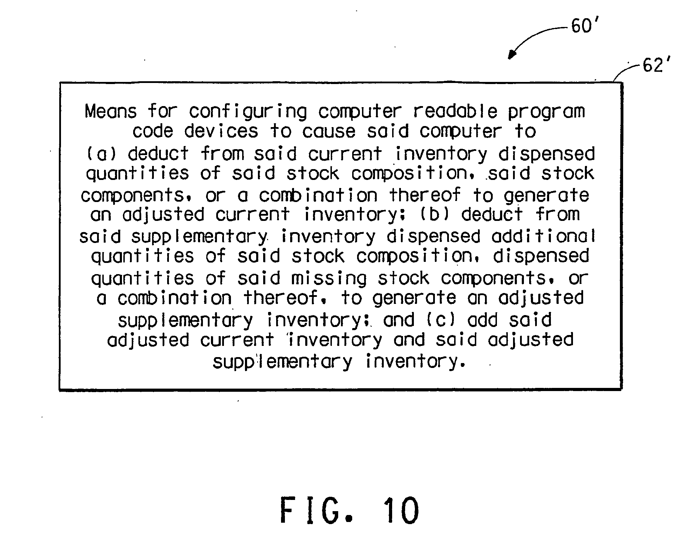

(VI) Finally, means 60' for configuring computer readable program code devices to cause the computer to generate an updated inventory. As shown in Figure 8B and Figure 10, means 60' of code means 15' include means 62' for configuring computer readable program code devices to cause computer 10" to (a) deduct from the current inventory dispensed quantities of the stock composition, the stock components, or a combination thereof to generate an adjusted current inventory; (b) deduct from the supplementary inventory dispensed additional quantities of the stock composition, dispensed quantities of the missing stock components, or a combination thereof, to generate an adjusted supplementary inventory; and (c) add the adjusted current inventory and the adjusted supplementary inventory.

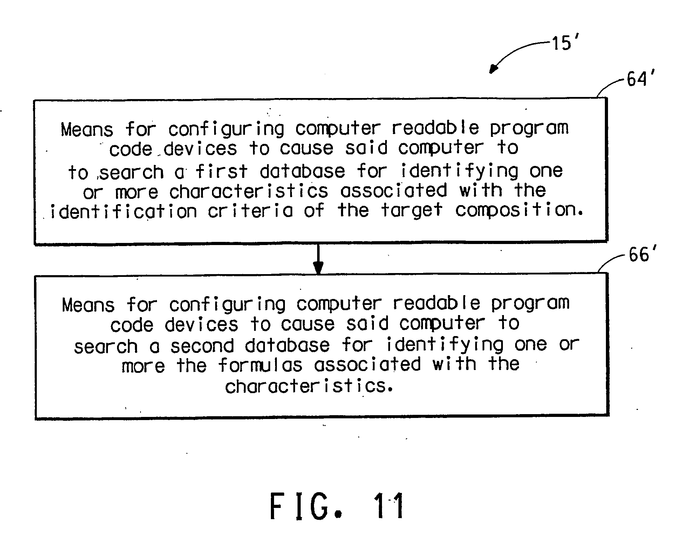

As shown in Figure 11, computer readable program code means 15' of device 2 also include:

(a) means 64' for configuring computer readable program code devices to cause computer 10" to search a first database for identifying one or more characteristics associated with the identification criteria of the target composition; and

(b) means 66' for configuring computer readable program code devices to cause computer 10" to search a second database for identifying one or more the formulas associated with the characteristics.

The process and the device of the present invention helps in eliminating the dispensing of poor quality substitution of components listed in the formula, thereby preventing the production of sub-standard compositions. The integrity of the quality of the composition can be maintained by identifying each stock composition or stock component container with a unique identification number, which can be stored by a component manufacturer as soon as the contents in those containers are produced (becomes part of the stored inventory). As a result, the manufacturer can generate and maintain complete information, including the quantity contained in the containers. As the contents in the container are consumed, an updated inventory can be transmitted to the manufacturer by allowing the manufacturer access to client computer 10 or host computer 12, which can be alternatively operated by the manufacturer. The updated inventory then becomes the current inventory in the subsequent dispensing cycle provided the user, such as a collision repair shop, makes no unauthorized additions or deletions to the current inventory. Thus, the process of the present invention helps in ensuring the product quality of the composition.

Additionally, since the manufacturer is aware of which component has been used up, the manufacturer can automatically augment the user with those depleted components without any formal request from the user, thereby reducing the time require to supply the components consumed by the user. Moreover, the manufacturer can also assist the user in reducing his inventory by supplying the components, just in time as they are used up. Moreover, the manufacturer can also bill the user on an "as-used-basis" for the cost of only the stock composition or components actually consumed. As a result, the user's out-of-pocket cost can be reduced. Finally, by using a transportable embodiment of the device of the present invention, the manufacturer could produce the S at the user's place of business, thus further reducing the user's need to maintain an extensive and expensive inventory.

## Claims

1. A monitoring device (1) comprising:
(A) a client computer usable storage medium (16) located in a client computer(10), and a host computer usable storage medium (18) located in a host computer (12) in communication with said client computer (10); and
(B) means (24) for dispensing required items for making a desired amount of a target composition, said means (24) for dispensing being in communication with said client computer (10), said host computer (12) , or said client and said host computer;
wherein said client computer usable storage medium (16), host computer usable storage medium (18), or said client computer usable storage and said host computer usable storage media have computer readable program code means (15) residing therein for monitoring production of said target composition, said computer readable program code means (15) comprising:
(I) means (50) for configuring computer readable program code devices to cause said client computer (10) or said host computer (12) to identify one or more formulas associated with identification criteria of said target composition, said formula providing a required inventory for making said desired amount of said target composition;
(II) means (52) for configuring computer readable program code devices to cause said client computer (10) or said host computer (12) to generate a current inventory; and
(III) means (54) for configuring computer readable program code devices to cause said client computer (10) or said host computer (12) to compare said current inventory against said required inventory to ascertain whether said current inventory fulfills said required inventory;
**characterized by**
(IV) means (56) for configuring computer readable program code devices to cause said client computer (10) or said host computer (12) to generate a supplementary inventory if said current inventory partially fulfills said required inventory;
(V) means (58) for configuring computer readable program code devices to cause said client computer (10) or said host computer (12) to dispense through said means (24) for dispensing said required items listed in said required inventory from current items listed in said current inventory, supplementary items listed in said supplementary inventory, or a combination thereof to make said desired amount of said target composition; and
(VI) means (60) for configuring computer readable program code devices to cause said client computer (10) or said host computer (12) to generate an updated inventory.

2. The device of claim 1 wherein said computer readable program code means comprise:
(a) means for configuring computer readable program code devices to cause said client computer or said host computer to search a first database for identifying one or more characteristics associated with said identification criteria of said target composition; and
(b) means for configuring computer readable program code devices to cause said client computer or said host computer to search a second database for identifying one or more said formulas associated with said characteristics.

3. The device of claim 2 wherein said first database resides on said client computer and said second database resides on said host computer, said first and said second database reside on said host computer in communication with said client computer, or said first and said second database reside on said client computer.

4. The device of claim 1 wherein said identification criteria comprise one or more of a manufacturer name, make, model, year of production, color name, paint code, cross reference information, intended use, VIN number, or spectrophotometric data of a vehicle or its color.

5. The device of claim 1 wherein said required items in said required inventory comprise:
(a) one or more compositions matching said characteristics and quantities thereof required to make said desired amount of said target composition;
(b) target components and quantities thereof listed in said formula that are required to make said desired amount of said target composition; or
(c) a combination of (a) and (b).

6. The device of claim 5 wherein said current items in said current inventory comprise:
(a) one or more stock compositions matching said characteristics and quantities thereof required to make said desired amount of said target composition;
(b) stock target components and quantities thereof listed in said formula that are required to make said desired amount of said target composition; or
(c) a combination of (a) and (b).

7. The device of claim 6 wherein said supplementary items in said supplementary inventory comprise:
(a) additional quantities of said stock compositions required to produce said desired amount of said target composition,
(b) any missing stock components that match said target components listed in said formula in sufficient quantities required to produce said desired amount of said target composition, or
(c) a combination of (a) and (b).

8. The device of claim 7 wherein said means (II) comprise means for configuring computer readable program code devices to cause said client computer or said host computer to receive:
(a) stock composition information on stock composition identification tags read by one or more identification tag interrogators, said stock composition identification tags being affixed to stock composition containers that contain said stock composition,
(b) stock component information on stock components identification tags read by said identification tag interrogators, said stock components identification tags being affixed to stock component containers that match said target components,
(c) additional stock composition information on additional stock composition identification tags read by said identification tag interrogators, said additional stock composition identification tags being affixed to additional stock composition containers that contain said stock composition, and
(d) missing stock component information on missing stock components identification tags read by said identification tag interrogators, said missing stock components identification tags being affixed to missing stock component containers.

9. The device of claim 8 wherein said stock composition containers, said stock component containers, said additional stock composition containers, said missing stock component containers, or a combination thereof are positioned in one or more stock racks of said device.

10. The device of claim 8 wherein said stock composition identification tags, stock component identification tags, additional stock composition identification tags and said missing stock components identification tags are RFID tags, bar code tags or a combination thereof.

11. The device of claim 8 wherein said wherein said stock composition identification tags, stock component identification tags, additional stock composition identification tags and said missing stock components identification tags are passive or active RFID tags.

12. The device of claim 8 wherein said identification tag interrogator is a RFID tag interrogator.

13. The device of claim 1 said means (VI) comprise means for configuring computer readable program code devices to cause said client computer or said host computer to:
(a) deduct from said current inventory dispensed quantities of said stock composition, said stock components, or a combination thereof to generate an adjusted current inventory;
(b) deduct from said supplementary inventory dispensed additional quantities of said stock composition, dispensed quantities of said missing stock components, or a combination thereof, to generate an adjusted supplementary inventory; and
(c) add said adjusted current inventory and said adjusted supplementary inventory.

14. The device of claim 1 or 13 wherein said means for dispensing required items comprise one more dispenser nozzles for dispensing said required items in an identified target composition receiver.

15. The device of claim 14 wherein said means for dispensing comprise means for conveying said required items to said dispenser nozzles from said stock composition containers, said stock component containers, said additional stock composition containers, said missing stock component containers, or a combination thereof.

16. The device of claim 14 said identified target composition receiver is provided with a target composition identification tag.

17. The device of claim 16 wherein said target composition identification tag is a RFID tag, a bar code tag or a combination thereof.

18. The device of claim 17 comprising an identification tag interrogator for writing to said target composition identification tag target composition information.

19. The device of claim 1 wherein said required inventory, said current inventory, said supplementary inventory, and said updated inventory are stored on a client computer, on a host computer in communication with said client computer, or on said client computer and said host computer.

20. The device of claim 19 comprising:
(a) means for weighing said required items in said identified target composition receiver,
(b) means for generating a signal upon completion of dispensing said required items in accordance with said required inventory, and
(c) means for transmitting said signal to said client computer, said host computer, said means for dispensing, or a combination thereof.

21. The device of claim 1 wherein said device is a transportable device.

22. A portable computer usable storage medium having said computer readable program code means of claim 1, 2 or 13 stored therein.

23. The portable computer usable storage medium of claim 22 wherein said medium is a CD-Rom.

24. A monitoring device comprising:
(A) a computer usable storage medium located in a computer; and
(B) means (24') for dispensing required items for making a desired amount of a target composition, said means (24') for dispensing being in communication with said computer (10");
wherein said computer usable storage medium (16') has computer readable program code means (15') residing therein for monitoring production of said target composition, said computer readable program code means (15') comprising:
(I) means (50') for configuring computer readable program code devices to cause said computer to identify one or more formulas associated with identification criteria of said target composition, said formula providing a required inventory for making said desired amount of said target composition;
(II) means (52') for configuring computer readable program code devices to cause said computer (10") to generate a current inventory; and
(III) means (54') for configuring computer readable program code devices to cause said computer (10") to compare said current inventory against said required inventory to ascertain whether said current inventory fulfills said required inventory;
**characterized by**
(IV) means (56') for configuring computer readable program code devices to cause said computer (10") to generate a supplementary inventory if said current inventory partially fulfills said required inventory;
(V) means (58') for configuring computer readable program code devices to cause said computer (10") to dispense through said means for dispensing said required items listed in said required inventory from current items listed in said current inventory, supplementary items listed in said supplementary inventory, or a combination thereof to make said desired amount of said target composition; and
(VI) means (60') for configuring computer readable program code devices to cause said computer (10") to generate an updated inventory.

25. A process for monitoring production of a target composition comprising:
(A) identifying one or more formulas associated with identification criteria of said target composition, said formula providing a required inventory for making a desired amount of said target composition;
(B) generating a current inventory; and
(C) comparing said current inventory against said required inventory to ascertain whether said current inventory fulfills said required inventory;
**characterized by**
(D) generating a supplementary inventory if said current inventory partially fulfills said required inventory;
(E) dispensing required items listed in said required inventory from current items listed in said current inventory, supplementary items listed in said supplementary inventory, or a combination thereof to make said desired amount of said target composition; and
(F) generating an updated inventory.

26. The process of claim 25 comprising:
- entering identification criteria of said target composition on a client computer or on a host computer in communication with said client computer;
- searching a first database residing on said client computer or on said host computer for identifying one or more characteristics associated with said identification criteria; and
- searching a second database residing on said client computer or said host computer for one or more formulas associated with said characteristics, said formula providing a required inventory for making a desired amount of said target composition;
wherein theses steps are performed before generating the current inventory and wherein the process further comprises:
storing said current inventory and said updated inventory on said client computer or on said host computer.

## Patentansprüche

1. Überwachungseinrichtung (1), umfassend:
(A) ein clientcomputerfähiges Speichermedium (16), das in einem Clientcomputer (10) angeordnet ist, und ein hostcomputerfähiges Speichermedium (18), das in einem Hostcomputer (12) angeordnet ist, der mit dem Clientcomputer (10) in Kommunikation steht; und
(B) Mittel (24) zum Ausgeben von zum Herstellen einer erwünschten Menge einer Zielzusammensetzung erforderlichen Items, wobei die Mittel (24) zum Ausgeben in Kommunikation mit dem Clientcomputer (10), dem Hostcomputer (12) oder dem Client- und dem Hostcomputer stehen;
worin das clientcomputerfähige Speichermedium (16), das hostcomputerfähige Speichermedium (18) oder die clientcomputerfähigen und die hostcomputerfähigen Speichermedien computerlesbare Programmcodemittel (15) haben, die darin zum Überwachen der Herstellung der Zielzusammensetzung residieren, wobei die computerlesbaren Programmcodemittel (15) Folgendes umfassen:
(I) Mittel (50) zum Konfigurieren von computerlesbaren Programmcodeinrichtungen, um zu bewirken, dass der Clientcomputer (10) oder der Hostcomputer (12) eine oder mehrere Formeln identifiziert, die mit Identifikationskriterien der Zielzusammensetzung assoziiert sind, wobei die Formel ein erforderliches Inventar zum Herstellen der erwünschten Menge der Zielzusammensetzung bereitstellt;
(II) Mittel (52) zum Konfigurieren von computerlesbaren Programmcodeinrichtungen, um zu bewirken, dass der Clientcomputer (10) oder der Hostcomputer (12) ein aktuelles Inventar generiert; und
(III) Mittel (54) zum Konfigurieren von computerlesbaren Programmcodeinrichtungen, um zu bewirken, dass der Clientcomputer (10) oder der Hostcomputer (12) das aktuelle Inventar mit dem erforderlichen Inventar vergleicht, um festzustellen, ob das aktuelle Inventar dem erforderlichen Inventar genügt;
**gekennzeichnet durch**
(IV) Mittel (56) zum Konfigurieren von computerlesbaren Programmcodeinrichtungen, um zu bewirken, dass der Clientcomputer (10) oder der Hostcomputer (12) ein ergänzendes Inventar generiert, falls das aktuelle Inventar dem erforderlichen Inventar zum Teil genügt;
(V) Mittel (58) zum Konfigurieren von computerlesbaren Programmcodeinrichtungen, um zu bewirken, dass der Clientcomputer (10) oder der Hostcomputer (12) **durch** die Mittel (24) zum Ausgeben die im erforderlichen Inventar aufgelisteten erforderlichen Items von im aktuellen Inventar aufgelisteten aktuellen Items, im ergänzenden Inventar aufgelisteten ergänzenden Items oder einer Kombination von diesen ausgibt, um die erwünschte Menge der Zielzusammensetzung herzustellen; und
(VI) Mittel (60) zum Konfigurieren von computerlesbaren Programmcodeinrichtungen, um zu bewirken, dass der Clientcomputer (10) oder der Hostcomputer (12) ein aktualisiertes Inventar generiert.

2. Einrichtung nach Anspruch 1, worin die computerlesbaren Programmcodemittel umfassen:
(a) Mittel zum Konfigurieren von computerlesbaren Programmcodeinrichtungen, um zu bewirken, dass der Clientcomputer oder der Hostcomputer eine erste Datenbank durchsucht, um eine oder mehrere Charakteristiken zu identifizieren, die mit den Identifikationskriterien der Zielzusammensetzung assoziiert sind; und
(b) Mittel zum Konfigurieren von computerlesbaren Programmcodeinrichtungen, um zu bewirken, dass der Clientcomputer oder der Hostcomputer eine zweite Datenbank durchsucht, um eine oder mehrere der Formeln zu identifizieren, die mit den Charakteristiken assoziiert sind.

3. Verfahren nach Anspruch 2, worin die erste Datenbank auf dem Clientcomputer residiert und die zweite Datenbank auf dem Hostcomputer residiert, wobei die erste und zweite Datenbank auf dem Hostcomputer in Kommunikation mit dem Clientcomputer residieren oder die erste und zweite Datenbank auf dem Clientcomputer residieren.

4. Einrichtung nach Anspruch 1, worin die Identifikationskriterien eins oder mehrere der Folgenden umfassen: Herstellername, Marke, Modell, Herstellungsjahr, Farbname, Farbcode, Querverweisinformation, beabsichtigte Verwendung, VIN-Nummer oder spektrophotometrische Daten eines Fahrzeugs oder seiner Farbe.

5. Einrichtung nach Anspruch 1, worin die erforderlichen Items im erforderlichen Inventar umfassen:
(a) eine oder mehrere Zusammensetzungen, die mit den Charakteristiken und deren Quantitäten übereinstimmen, die erforderlich sind, um die erwünschte Menge der Zielzusammensetzung herzustellen;
(b) in der Formel aufgelistete Zielbestandteile und deren Quantitäten, die erforderlich sind, um die erwünschte Menge der Zielzusammensetzung herzustellen; oder
(c) eine Kombination von (a) und (b).

6. Einrichtung nach Anspruch 5, worin die aktuellen Items im aktuellen Inventar umfassen:
(a) eine oder mehrere Materialzusammensetzungen, die mit den Charakteristiken und deren Quantitäten übereinstimmen, die erforderlich sind, um die erwünschte Menge der Zielzusammensetzung herzustellen;
(b) Materialzielbestandteile und deren Quantitäten, die in der Formel aufgelistet sind und erforderlich sind, um die erwünschte Menge der Zielzusammensetzung herzustellen; oder
(c) eine Kombination von (a) und (b).

7. Einrichtung nach Anspruch 6, worin die ergänzenden Items im ergänzenden Inventar umfassen:
(a) zusätzliche Quantitäten der Materialzusammensetzungen, die erforderlich sind, um die erwünschte Menge der Zielzusammensetzung herzustellen,
(b) fehlende Materialbestandteile, die mit den in der Formel aufgelisteten Zielbestandteilen übereinstimmen, in ausreichenden Quantitäten, die erforderlich sind, um die erwünschte Menge der Zielzusammensetzung herzustellen, oder
(c) eine Kombination von (a) und (b).

8. Einrichtung nach Anspruch 7, worin die Mittel (II) Mittel umfassen zum Konfigurieren von computerlesbaren Programmcodeeinrichtungen, um zu bewirken, dass der Clientcomputer oder der Hostcomputer Folgendes empfängt:
(a) Materialzusammensetzungsinformation auf Materialzusammensetzungs-Identifikationsetiketten, die von einem oder mehreren Identifikationsetiketten-Abfragegeräten ausgelesen werden, wobei die Materialzusammensetzungs-Identifikationsetikette an Materialzusammensetzungsbehältern befestigt sind, die die Materialzusammensetzung enthalten,
(b) Materialbestandteilinformation auf Materialbestandteil-Identifikationsetiketten, die von den Identifikationsetiketten-Abfragegeräten ausgelesen werden, wobei die Materialbestandteil-Identifikationsetikette an Materialbestandteilbehältern befestigt sind, die mit den Zielbestandteilen übereinstimmen,
(c) zusätzliche Materialzusammensetzungsinformation auf zusätzlichen Materialzusammensetzungs-Identifikationsetiketten, die von den Identifikationsetiketten-Abfragegeräten ausgelesen werden, wobei die zusätzlichen Materialzusammensetzungs-Identifikationsetikette an zusätzlichen Materialzusammensetzungsbehältern befestigt sind, die die Materialzusammensetzung enthalten, und
(d) fehlende Materialbestandteilinformation auf Identifikationsetiketten fehlender Materialbestandteile, die von den Identifikationsetiketten-Abfragegeräten ausgelesen werden, wobei die Identifikationsetikette fehlender Materialbestandteile an fehlenden Materialbestandteilbehältern befestigt sind.

9. Einrichtung nach Anspruch 8, worin die Materialzusammensetzungsbehälter, die Materialbestandteilbehälter, die zusätzlichen Materialzusammensetzungsbehälter, die Behälter fehlender Materialbestandteile oder eine Kombination von diesen in einem oder mehreren Materialgestellen der Einrichtung positioniert sind.

10. Einrichtung nach Anspruch 8, worin die Materialzusammensetzungs-Identifikationsetikette, Materialbestandteil-Identifikationsetikette, zusätzliche Materialzusammensetzungs-Identifikationsetikette und die Identifikationsetikette fehlender Materialbestandteile RFID-Etikette, Strichcodeetikette oder eine Kombination von diesen sind.

11. Einrichtung nach Anspruch 8, worin die Materialzusammensetzungs-Identifikationsetikette, Materialbestandteil-Identifikationsetikette, zusätzliche Materialzusammensetzungs-Identifikationsetikette und die Identifikationsetikette fehlender Materialbestandteile passive oder aktive RFID-Etikette sind.

12. Einrichtung nach Anspruch 8, worin das Identifikationsetiketten-Abfragegerät ein RFID-Etikettenabfragegerät ist.

13. Einrichtung nach Anspruch 1, worin die Mittel (VI) Mittel zum Konfigurieren von computerlesbaren Programmcodeeinrichtungen sind, um zu bewirken, dass der Clientcomputer oder der Hostcomputer:
(a) vom aktuellen Inventar ausgegebene Quantitäten der Materialzusammensetzung, der Materialbestandteile oder einer Kombination von diesen abzieht, um ein angepasstes aktuelles Inventar zu generieren;
(b) vom ergänzenden Inventar ausgegebene zusätzliche Quantitäten der Materialzusammensetzung, ausgegebene Quantitäten der fehlenden Materialbestandteile oder eine Kombination von diesen abzieht, um ein angepasstes ergänzendes Inventar zu generieren; und
(c) das angepasste aktuelle Inventar und das angepasste ergänzende Inventar addiert.

14. Einrichtung nach Anspruch 1 oder 13, worin die Mittel zum Ausgeben erforderlicher Items eine oder mehrere Dispenserdüsen zum Ausgeben der erforderlichen Items in einem identifizierten Zielzusammensetzungsempfänger umfassen.

15. Einrichtung nach Anspruch 14, worin die Mittel zum Ausgeben Mittel zum Transportieren der erforderlichen Items zu den Dispenserdüsen von den Materialzusammensetzungsbehältem, den Materialbestandteilbehältern, den zusätzlichen Materialzusammensetzungsbehältern, den Behältern fehlender Materialbestandteile oder einer Kombination von diesen umfassen.

16. Einrichtung nach Anspruch 14, wobei dem identifizierten Zielzusammensetzungsempfänger ein Zielzusammensetzungs-Identifikationsetikett bereitgestellt wird.

17. Einrichtung nach Anspruch 16, worin das Zielzusammensetzungs-Identifikationsetikett ein RFID-Etikett, ein Strichcodeetikett oder eine Kombination von diesen ist.

18. Einrichtung nach Anspruch 17, die ein Identifikationsetiketten-Abfragegerät umfasst, um die Zielzusammensetzungsinformation in das Zielzusammensetzungsetikett einzuschreiben.

19. Einrichtung nach Anspruch 1, worin das erforderliche Inventar, das aktuelle Inventar, das ergänzende Inventar und das aktualisierte Inventar auf einem Clientcomputer, auf einem mit dem Clientcomputer in Kommunikation stehenden Hostcomputer oder auf dem Clientcomputer und dem Hostcomputer gespeichert werden.

20. Einrichtung nach Anspruch 19, umfassend:
(a) Mittel zum Wiegen der erforderlichen Items im identifizierten Zielzusammensetzungsempfänger,
(b) Mittel zum Generieren eines Signals nach Beendigung des Ausgebens der erforderlichen Items gemäß dem erforderlichen Inventar, und
(c) Mittel zum Übertragen des Signals an den Clientcomputer, den Hostcomputer, die Mittel zum Ausgeben oder eine Kombination von diesen.

21. Einrichtung nach Anspruch 1, worin die Einrichtung eine transportable Einrichtung ist.

22. Tragbares computerfähiges Speichermedium, auf dem die computerlesbaren Programmcodemittel nach Anspruch 1, 2 oder 13 gespeichert sind.

23. Tragbares computerfähiges Speichermedium nach Anspruch 22, worin das Medium ein CD-ROM ist.

24. Überwachungseinrichtung, umfassend:
(A) ein in einem Computer angeordnetes computerfähiges Speichermedium; und
(B) Mittel (24') zum Ausgeben von zum Herstellen einer erwünschten Menge einer Zielzusammensetzung erforderlichen Items, wobei die Mittel (24') zum Ausgeben in Kommunikation mit dem Clientcomputer (10") stehen;
worin das computerfähige Speichermedium (16') computerlesbare Programmcodemittel (15') hat, die darin zum Überwachen der Herstellung der Zielzusammensetzung residieren, wobei die computerlesbaren Programmcodemittel (15') Folgendes umfassen:
(I) Mittel (50') zum Konfigurieren von computerlesbaren Programmcodeinrichtungen, um zu bewirken, dass der Computer eine oder mehrere Formeln identifiziert, die mit Identifikationskriterien der Zielzusammensetzung assoziiert sind, wobei die Formel ein erforderliches Inventar zum Herstellen der erwünschten Menge der Zielzusammensetzung bereitstellt;
(II) Mittel (52') zum Konfigurieren von computerlesbaren Programmcodeinrichtungen, um zu bewirken, dass der Computer (10") ein aktuelles Inventar generiert; und
(III) Mittel (54') zum Konfigurieren von computerlesbaren Programmcodeinrichtungen, um zu bewirken, dass der Computer (10") das aktuelle Inventar mit dem erforderlichen Inventar vergleicht, um festzustellen, ob das aktuelle Inventar dem erforderlichen Inventar genügt;
**gekennzeichnet durch**
(IV) Mittel (56') zum Konfigurieren von computerlesbaren Programmcodeinrichtungen, um zu bewirken, dass der Computer (10") ein ergänzendes Inventar generiert, falls das aktuelle Inventar dem erforderlichen Inventar zum Teil genügt;
(V) Mittel (58') zum Konfigurieren von computerlesbaren Programmcodeinrichtungen, um zu bewirken, dass der Computer (10") **durch** die Mittel zum Ausgeben die im erforderlichen Inventar aufgelisteten erforderlichen Items von im aktuellen Inventar aufgelisteten aktuellen Items, im ergänzenden Inventar aufgelisteten ergänzenden Items oder einer Kombination von diesen ausgibt, um die erwünschte Menge der Zielzusammensetzung herzustellen; und
(VI) Mittel (60') zum Konfigurieren von computerlesbaren Programmcodeinrichtungen, um zu bewirken, dass der Computer (10") ein aktualisiertes Inventar generiert.

25. Prozess zum Überwachen der Herstellung einer Zielzusammensetzung, umfassend:
(A) Identifizieren von einer oder mehreren Formeln, die mit Identifikationskriterien der Zielzusammensetzung assoziiert sind, wobei die Formel ein erforderliches Inventar bereitstellt, um eine erwünschte Menge der Zielzusammensetzung herzustellen;
(B) Generieren eines aktuellen Inventars; und
(C) Vergleichen des aktuellen Inventars mit dem erforderlichen Inventar, um festzustellen, ob das aktuelle Inventar dem erforderlichen Inventar genügt;
**gekennzeichnet durch**
(D) Generieren eines ergänzenden Inventars, falls das aktuelle Inventar dem erforderlichen Inventar zum Teil genügt;
(E) Ausgeben von im erforderlichen Inventar aufgelisteten erforderlichen Items von im aktuellen Inventar aufgelisteten aktuellen Items, im ergänzenden Inventar aufgelisteten ergänzenden Items oder einer Kombination von diesen, um die erwünschte Menge der Zielzusammensetzung herzustellen; und
(F) Generieren eines aktualisierten Inventars.

26. Prozess nach Anspruch 25, umfassend:
- Eingeben von Identifikationskriterien der Zielzusammensetzung auf einen Clientcomputer oder auf einen Hostcomputer, der mit dem Clientcomputer in Kommunikation steht;
- Durchsuchen einer ersten Datenbank, die auf dem Clientcomputer oder dem Hostcomputer residiert, zum Identifizieren von einer oder mehreren Charakteristiken, die mit den Identifikationskriterien assoziiert sind; und
- Durchsuchen einer zweiten Datenbank, die auf dem Clientcomputer oder dem Hostcomputer residiert, nach einer oder mehreren Formeln, die mit den Charakteristiken assoziiert sind, wobei die Formel ein erforderliches Inventar zum Herstellen einer erwünschten Menge der Zielzusammensetzung bereitstellt;
worin diese Schritte vor dem Generieren des aktuellen Inventars ausgeführt werden und worin der Prozess außerdem umfasst:
Speichern des aktuellen Inventars und des aktualisierten Inventars auf dem Clientcomputer oder auf dem Hostcomputer.

## Revendications

1. Dispositif de surveillance (1) comportant :
(A) un support de stockage utilisable par un ordinateur client (16) localisé dans un ordinateur client (10), et un support de stockage utilisable par un ordinateur hôte (18) localisé dans un ordinateur hôte (12) en communication avec ledit ordinateur client (10) ; et
(B) un moyen (24) permettant de distribuer des éléments requis pour obtenir une quantité désirée d'une composition cible, ledit moyen (24) de distribution étant en communication avec ledit ordinateur client (10), avec ledit ordinateur hôte (12), ou avec ledit ordinateur client et ledit ordinateur hôte ;
dans lequel ledit support de stockage utilisable par un ordinateur client (16), ledit support de stockage utilisable par un ordinateur hôte (18), ou ledit support de stockage utilisable par un ordinateur client et ledit support de stockage utilisable par un ordinateur hôte présentent un moyen de code de programme lisible par un ordinateur (15) installé dans ces derniers pour contrôler la production de ladite composition cible, ledit moyen de code de programme lisible par un ordinateur (15) comportant :
(I) un moyen (50) permettant de configurer des dispositifs de code de programme lisible par un ordinateur de manière à amener ledit ordinateur client (10) ou ledit ordinateur hôte (12) à identifier une ou plusieurs formules associées à des critères d'identification de ladite composition cible, ladite formule délivrant un inventaire requis pour obtenir ladite quantité désirée de ladite composition cible ;
(II) un moyen (52) permettant de configurer des dispositifs de code de programme lisible par un ordinateur de manière à amener ledit ordinateur client (10) ou ledit ordinateur hôte (12) à générer un inventaire en cours ; et
(III) un moyen (54) permettant de configurer des dispositifs de code de programme lisible par un ordinateur de manière à amener ledit ordinateur client (10) ou ledit ordinateur hôte (12) à comparer ledit inventaire en cours audit inventaire requis de manière à garantir que ledit inventaire en cours correspond audit inventaire requis ;
**caractérisé par**
(IV) un moyen (56) permettant de configurer des dispositifs de code de programme lisible par un ordinateur de manière à amener ledit ordinateur client (10) ou ledit ordinateur hôte (12) à générer un inventaire supplémentaire lorsque ledit inventaire en cours ne correspond que partiellement audit inventaire requis ;
(V) un moyen (58) permettant de configurer des dispositifs de code de programme lisible par un ordinateur de manière à amener ledit ordinateur client (10) ou ledit ordinateur hôte (12) à distribuer, par le bais dudit moyen (24) de distribution, lesdits éléments requis répertoriés dans ledit inventaire requis, à partir d'éléments en cours répertoriés dans ledit inventaire en cours, d'éléments supplémentaires répertoriés dans ledit inventaire supplémentaire, ou d'une combinaison de ceux-ci, pour obtenir ladite quantité désirée de ladite composition cible ; et
(VI) un moyen (60) permettant de configurer des dispositifs de code de programme lisible par un ordinateur de manière à amener ledit ordinateur client (10) ou ledit ordinateur hôte (12) à générer un inventaire mis à jour.

2. Dispositif selon la revendication 1, dans lequel ledit moyen de code de programme lisible par un ordinateur comporte :
(a) un moyen permettant de configurer des dispositifs de code de programme lisible par un ordinateur de manière à amener ledit ordinateur client ou ledit ordinateur hôte à rechercher dans une première base de données pour identifier une ou plusieurs caractéristiques associées auxdits critères d'identification de ladite composition cible ; et
(b) un moyen permettant de configurer des dispositifs de code de programme lisible par un ordinateur de manière à amener ledit ordinateur client ou ledit ordinateur hôte à rechercher dans une seconde base de données pour identifier une ou plusieurs desdites formules associées auxdites caractéristiques.

3. Dispositif selon la revendication 2, dans lequel ladite première base de données réside dans ledit ordinateur client et ladite seconde base de données réside dans ledit ordinateur hôte, lesdites première et seconde bases de données résident dans ledit ordinateur hôte en communication avec ledit ordinateur client, ou lesdites première et seconde bases de données résident dans ledit ordinateur client.

4. Dispositif selon la revendication 1, dans lequel lesdits critères d'identification comportent une ou plusieurs informations parmi le nom du fabriquant, la marque, le modèle, l'année de production, la référence de couleur, le référence de teinte, des informations de référence croisée, la destination, le numéro VIN, ou des données spectrophotométrique d'un véhicule ou de sa couleur.

5. Dispositif selon la revendication 1, dans lequel lesdits éléments requis dans ledit inventaire requis comportent :
(a) une ou plusieurs compositions correspondant auxdites caractéristiques et quantités requises pour obtenir ladite quantité désirée de ladite composition cible ;
(b) des composants cible et quantités de ceux-ci répertoriés dans ladite formule lesquels sont requis pour obtenir ladite quantité désirée de ladite composition cible ; ou
(c) une combinaison des points (a) et (b).

6. Dispositif selon la revendication 5, dans lequel lesdits éléments en cours dans ledit inventaire en cours comportent :
(a) une ou plusieurs compositions de stock correspondant auxdites caractéristiques et quantités de celles-ci requises pour obtenir ladite quantité désirée de ladite composition cible ;
(b) des composants cible de stock et quantités de ceux-ci répertoriés dans ladite formule lesquels sont requis pour obtenir ladite quantité désirée de ladite composition cible ; ou
(c) une combinaison des points (a) et (b).

7. Dispositif selon la revendication 6, dans lequel lesdits éléments supplémentaires dans ledit inventaire supplémentaire comportent :
(a) des quantités supplémentaires desdites compositions de stock requises pour produire ladite quantité désirée de ladite composition cible,
(b) tous les composants de stock manquants lesquels correspondent auxdits composants cible répertoriés dans ladite formule en quantités suffisantes requises pour produire ladite quantité désirée de ladite composition cible, ou
(c) une combinaison des points (a) et (b).

8. Dispositif selon la revendication 7, dans lequel ledit moyen (II) comporte un moyen permettant de configurer des dispositifs de code de programme lisible par un ordinateur de manière à amener ledit ordinateur client ou ledit ordinateur hôte à recevoir :
(a) des informations de composition de stock sur des étiquettes d'identification de composition de stock lues par un ou plusieurs interrogateurs d'étiquettes d'identification, lesdites étiquettes d'identification de composition de stock étant apposées à des conteneurs de composition de stock qui contiennent ladite composition de stock,
(b) des informations de composants de stock sur des étiquettes d'identification de composants de stock lues par lesdits interrogateurs d'étiquettes d'identification, lesdites étiquettes d'identification de composants de stock étant apposées à des conteneurs de composants de stock lesquels correspondent auxdits composants cible,
(c) des informations de composition de stock supplémentaires sur des étiquettes d'identification de composition de stock supplémentaires lues par lesdits interrogateurs d'étiquettes d'identification, lesdites étiquettes d'identification de composition de stock supplémentaires étant apposées à des conteneurs de composition de stock supplémentaires qui contiennent ladite composition de stock, et
(d) des informations de composants de stock manquantes sur des étiquettes d'identification de composition de stock manquantes lues par lesdits interrogateurs d'étiquettes d'identification, lesdites étiquettes d'identification de composition de stock manquantes étant apposées à des conteneurs de composants de stock manquants.

9. Dispositif selon la revendication 8, dans lequel lesdits conteneurs de composition de stock, lesdits conteneurs de composants de stock, lesdits conteneurs de composition de stock supplémentaires, lesdits conteneurs de composants de stock manquants, ou une combinaison de ceux-ci sont placés dans une ou plusieurs étagères de stock dudit dispositif.

10. Dispositif selon la revendication 8, dans lequel lesdites étiquettes d'identification de composition de stock, lesdites étiquettes d'identification de composants de stock, lesdites étiquettes d'identification de composition de stock supplémentaires et lesdites étiquettes d'identification de composition de stock manquantes sont des étiquettes RFID, des étiquettes de code à barres ou une combinaison de celles-ci.

11. Dispositif selon la revendication 8, dans lequel lesdites étiquettes d'identification de composition de stock, lesdites étiquettes d'identification de composants de stock, lesdites étiquettes d'identification de composition de stock supplémentaires et lesdites étiquettes d'identification de composition de stock manquantes sont des étiquettes RFID passives ou actives.

12. Dispositif selon la revendication 8, dans lequel ledit interrogateur d'étiquettes d'identification est un interrogateur d'étiquettes RFID.

13. Dispositif selon la revendication 1, ledit moyen (VI) comportant un moyen permettant de configurer des dispositifs de code de programme lisible par un ordinateur de manière à amener ledit ordinateur client ou ledit ordinateur hôte à :
(a) déduire, à partir dudit inventaire en cours, des quantités distribuées de ladite composition de stock, desdits composants de stock, ou une combinaison de ceux-ci, pour générer un inventaire en cours ajusté ;
(b) déduire, à partir dudit inventaire supplémentaire, des quantités supplémentaires distribuées de ladite composition de stock, des quantités distribuées desdits composants de stock manquants, ou une combinaison de ceux-ci, pour générer un inventaire supplémentaire ajusté ; et
(c) ajouter ledit inventaire en cours ajusté et ledit inventaire supplémentaire ajusté.

14. Dispositif selon la revendication 1 ou 13, dans lequel ledit moyen de distribution des éléments requis comporte une ou plusieurs têtes de buse de distribution permettant de distribuer lesdits éléments requis dans un récepteur de composition cible identifié.

15. Dispositif selon la revendication 14, dans lequel ledit moyen de distribution comporte un moyen pour acheminer lesdits éléments requis auxdites têtes de buse de distribution à partir desdits conteneurs de composition de stock, desdits conteneurs de composants de stock, desdits conteneurs de composition de stock supplémentaires, desdits conteneurs de composants de stock manquants, ou une combinaison de ceux-ci.

16. Dispositif selon la revendication 14, ledit récepteur de composition cible identifié est pourvu d'une étiquette d'identification de composition cible.

17. Dispositif selon la revendication 16, dans lequel ladite étiquette d'identification de composition cible est une étiquette RFID, une étiquette de code à barres ou une combinaison de celles-ci.

18. Dispositif selon la revendication 17, comportant un interrogateur d'étiquettes d'identification pour inscrire des informations de composition cible sur ladite étiquette d'identification de composition cible.

19. Dispositif selon la revendication 1, dans lequel ledit inventaire requis, ledit inventaire en cours, ledit inventaire supplémentaire, et ledit inventaire mis à jour sont stockés dans un ordinateur client, dans un ordinateur hôte en communication avec ledit ordinateur client, ou dans ledit ordinateur client et ledit ordinateur hôte.

20. Dispositif selon la revendication 19 comportant :
(a) un moyen pour peser lesdits éléments requis dans le récepteur de composition cible identifié,
(b) un moyen pour générer un signal suite à l'achèvement de la distribution desdits éléments requis selon ledit inventaire requis, et
(c) un moyen pour transmettre ledit signal audit ordinateur client, audit ordinateur hôte, audit moyen de distribution, ou une à combinaison de ceux-ci.

21. Dispositif selon la revendication 1 dans lequel ledit dispositif est un dispositif transportable.

22. Support de stockage utilisable dans un ordinateur portable présentant ledit moyen de code de programme lisible par un ordinateur selon la revendication 1, 2 ou 13 stocké dans celui-ci.

23. Support de stockage utilisable dans un ordinateur portable selon la revendication 22, dans lequel ledit support est un CD-Rom.

24. Dispositif de surveillance comportant :
(A) un support de stockage utilisable par un ordinateur localisé dans un ordinateur ; et
(B) un moyen (24') permettant de distribuer des éléments requis pour obtenir une quantité désirée d'une composition cible, ledit moyen (24") de distribution étant en communication avec ledit ordinateur (10") ;
dans lequel ledit support de stockage utilisable par un ordinateur (16') présente un moyen de code de programme lisible par un ordinateur (15') résidant dans celui-ci pour contrôler la production de ladite composition cible, ledit moyen de code de programme lisible par un ordinateur (15') comportant :
(I) un moyen (50') permettant de configurer des dispositifs de code de programme lisible par un ordinateur de manière à amener ledit ordinateur à identifier une ou plusieurs formules associées à des critères d'identification de ladite composition cible, ladite formule délivrant un inventaire requis pour obtenir ladite quantité désirée de ladite composition cible ;
(II) un moyen (52') permettant de configurer des dispositifs de code de programme lisible par un ordinateur de manière à amener ledit ordinateur (10") à générer un inventaire en cours ; et
(III) un moyen (54') permettant de configurer des dispositifs de code de programme lisible par un ordinateur de manière à amener ledit ordinateur (10") à comparer ledit inventaire en cours audit inventaire requis de manière à garantir que ledit inventaire en cours correspond audit inventaire requis ;
**caractérisé par**
(IV) un moyen (56') permettant de configurer des dispositifs de code de programme lisible par un ordinateur de manière à amener ledit ordinateur (10") à générer un inventaire supplémentaire lorsque ledit inventaire en cours ne correspond que partiellement audit inventaire requis ;
(V) un moyen (58') permettant de configurer des dispositifs de code de programme lisible par un ordinateur de manière à amener ledit ordinateur (10") à distribuer, par le bais dudit moyen de distribution, lesdits éléments requis répertoriés dans ledit inventaire requis, à partir d'éléments en cours répertoriés dans ledit inventaire en cours, d'éléments supplémentaires répertoriés dans ledit inventaire supplémentaire, ou d'une combinaison de ceux-ci, de manière à obtenir ladite quantité désirée de ladite composition cible ; et
(VI) un moyen (60') permettant de configurer des dispositifs de code de programme lisible par un ordinateur de manière à amener ledit ordinateur (10") à générer un inventaire mis à jour.

25. Processus pour contrôler la production d'une composition cible, comportant les étapes ci-après consistant à :
(A) identifier une ou plusieurs formules associées à des critères d'identification de ladite composition cible, ladite formule délivrant un inventaire requis pour obtenir une quantité désirée de ladite composition cible ;
(B) générer un inventaire en cours ; et
(C) comparer ledit inventaire en cours audit inventaire requis de manière à garantir que ledit inventaire en cours correspond audit inventaire requis ;
**caractérisé par** les étapes ci-dessous consistant à
(D) générer un inventaire supplémentaire lorsque ledit inventaire en cours ne correspond que partiellement audit inventaire requis ;
(E) distribuer des éléments requis répertoriés dans ledit inventaire requis, à partir d'éléments en cours répertoriés dans ledit inventaire en cours, d'éléments supplémentaires répertoriés dans ledit inventaire supplémentaire, ou d'une combinaison de ceux-ci, de manière à obtenir ladite quantité désirée de ladite composition cible ; et
(F) générer un inventaire mis àjour.

26. Processus selon la revendication 25 comportant les étapes ci-après consistant à :
- saisir des critères d'identification de ladite composition cible sur un ordinateur client ou sur un ordinateur hôte en communication avec ledit ordinateur client ;
- rechercher dans une première base de données résidant dans ledit ordinateur client ou dans ledit ordinateur hôte pour identifier une ou plusieurs caractéristiques associées auxdits critères d'identification ; et
- rechercher dans une seconde base de données résidant dans ledit ordinateur client ou ledit ordinateur hôte, une ou plusieurs formules associées auxdites caractéristiques, ladite formule délivrant un inventaire requis pour obtenir une quantité désirée de ladite composition cible ;
dans lequel ces étapes sont mises en oeuvre avant de générer l'inventaire en cours et dans lequel le processus comporte en outre l'étape consistant à :
stocker ledit inventaire en cours et ledit inventaire mis à jour dans ledit ordinateur client ou dans ledit ordinateur hôte.
